# EUROPEAN PATENT SPECIFICATION

(11) **EP 2 477 481 B1**
(45) Date of publication and mention of the grant of the patent: **17.07.2013**
(21) Application number: 10760784.8
(22) Date of filing: 17.09.2010
(51) Int. Cl.: A01K 1/12

(54) **LIVESTOCK TREATMENT CAROUSEL**
VIEHBEHANDLUNGSKARUSSELL
CARROUSEL DE TRAITEMENT DE BÉTAIL

(30) Priority: 17.09.2009 NL 2003503
(43) Date of publication of application: 25.07.2012
(73) Proprietor: Schouten, Petrus Adrianus Jacobus, 9998 XB Rottum (NL)
(72) Inventor: Schouten, Petrus Adrianus Jacobus, 9998 XB Rottum (NL)
(74) Representative: Jansen, Cornelis Marinus
(86) International application number: PCT/NL2010/050601
(87) International publication number: WO 2011/034426

(56) References cited:
- EP-A1- 1 733 615
- GB-A- 1 201 651

## Description

The invention relates to a livestock treatment carousel for facilitating the treatment of a plurality of livestock animals.

The livestock animals that can be treated in such a carousel according to the invention may be of various kinds, such as cows, goats, sheep, horses, swine, ostrich, and the like. Also, the treatments that can be performed using such a carousel according to the invention may be of various kinds, such as milking, pregnancy checks, insemination, medication, vaccination, or the like.

A livestock treatment carousel according to the preamble of claim 1 is known from practice. This known carousel is for milking cows and is operated as follows. One by one, the cows enter a ringshaped livestock receiving area from the outside thereof and each cow assumes its treatment position in a stall. In this treatment position the cow is received in its respective stall with its head facing away from the vertical rotation axis and its hindquarters facing towards the vertical rotation axis. Milking is performed from the inside of the ringshaped receiving area. Once being milked, a cow can leave its stall via the outside of the ringshaped receiving area. During all this, the horizontal platform is rotating about its vertical rotation axis. Each stall is provided with a corresponding feed container at the stall's outer stall end facing away from the vertical rotation axis of the platform. These feed containers serve, amongst others, as an animal-friendly way of stimulating the cows to enter and/or leave their stalls. That is, before entering its stall a cow will expect that there is a full feed container waiting for it, while the feeding dosis may be such that the feed container is empty when it is time for the cow to leave its stall. In addition, feeding the cows serves to stimulate the milk delivery from the udders of the cow. Said entering and leaving the stalls is done via the outer stall ends of the stalls. For this known carousel, the stalls are relatively wide since they have to be wide enough for the cow to enter and leave such a stall via its stall outer end without being hindered by the presence of the feed container at that stall outer end.

A drawback of this known carousel is that it is relatively inefficient in the sense that its dimensions are relatively large as compared to the number of cows that can be received in it simultaneously.

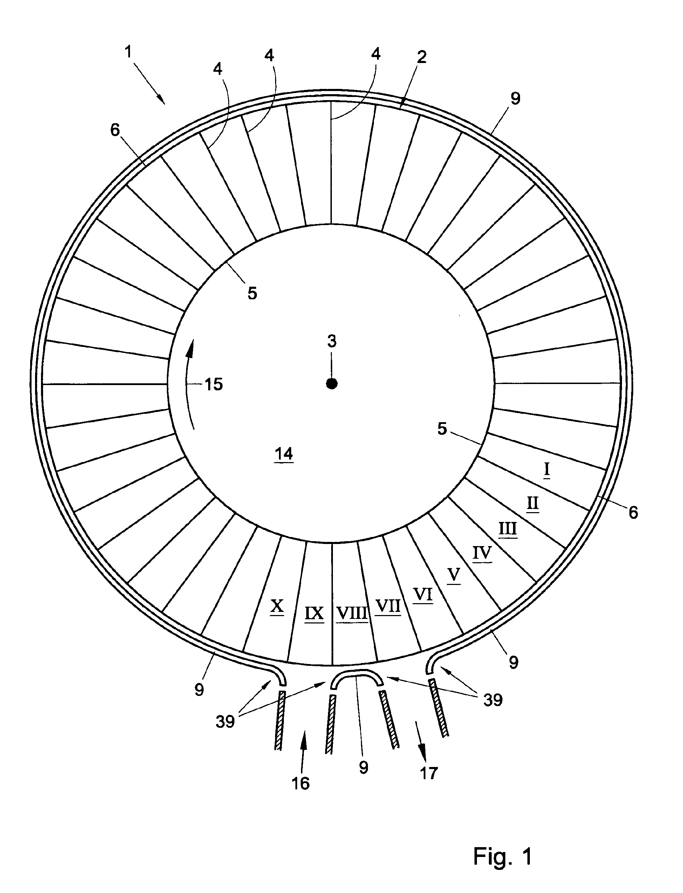

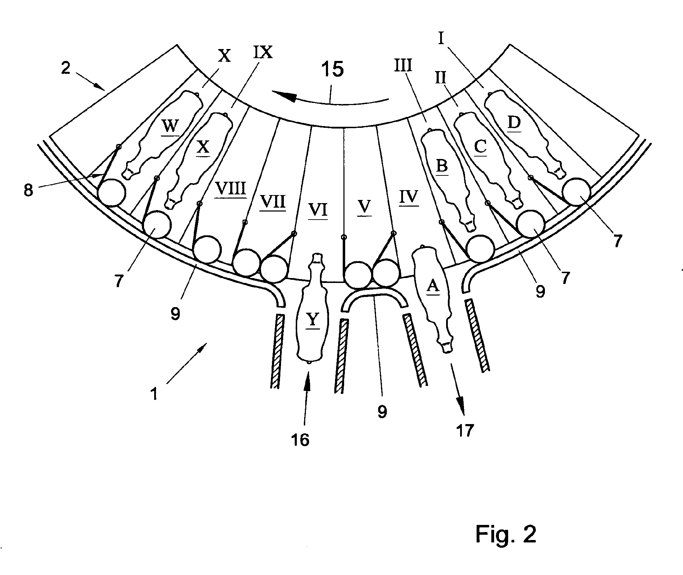

Another livestock treatment carousel according to the preamble of claim 1 is known from EP1733615A1. The fence structure of this known carousel comprises a number of gates 3. Each gate 3 is rotatable relative to the platform 2 of the carousel. In a first embodiment, shown in Fig. 1 of EP1733615A1, the gates 3 are rotatable around an axis located near the outer periphery of the platform. In a second embodiment, shown in Fig. 2 of EP1733615A1, the gates 3 are rotatable around an axis located near the inner periphery of the platform. In both embodiments, the gates 3 are defining a plurality of mutually adjacent stalls being arranged in a r herringbone pattern along the platform. For allowing a livestock animal to enter the platform, a gate 3 has to rotate relative to the platform, i.e. in clockwise direction in the Fig. 1 embodiment and in anti-clockwise direction in the Fig. 2 embodiment. As a consequence of one or two gates 3 thus temporarily rotating relative to the platform, the shapes of the corresponding stalls are temporarily changing, since the stall shapes evidently are defined by the positions of the gates 3. The herringbone pattern and the many and relatively large moving gates 3 entail a relatively space-inefficient accommodation of the livestock animals on the platform, a relatively complex structure of the carousel and an unsafe environment for operators and animals. A further drawback, resulting from the moveability of the gates 3, is that one or more animals, while being stalled on the rotating platform, may undesirably move one or more of the gates, e.g. to create more space in their stalls or e.g. in case of fear or panic of the animals.

Yet another livestock treatment carousel according to the preamble of claim 1 is known from GB1201651A, which carousel in many respects is similar to that of the abovementioned document EP1733615A1. The carousel known from GB1201651A also has gates which are rotatable relative to the platform of the carousel. Feed troughs are fixed to these moveable gates and are pivoted together with the gates. The gates again define a herringbone pattern. The carousel known from GB1201651A has drawbacks similar to those mentioned above for EP1733615A1.

In order to obtain a more efficient milking carousel, it is known from practice to not provide the stalls with feed containers. In that way, the carousel may be designed with a decreased width of the stalls, thus allowing more stalls to be present on the same surface area of the ringshaped receiving area. However, this solution is unfavourable because of the loss of the feed containers and thus the loss of a proven animal-friendly way of stimulating the cows to enter and/or leave their stalls as well as the loss of a proven animal-friendly way of stimulating the milk delivery from the udders.

Partly because of the abovedescribed drawbacks of the known livestock treatment carousels of the type in which the livestock animals are received in their stalls with their heads facing away from the vertical rotation axis, and their hindquarters facing towards the vertical rotation axis, carousels of this type are not frequently used. Often, preference is given to livestock treatment carousels of another type in which the livestock animals are received in their stalls in opposite direction, that is with their heads facing towards the vertical rotation axis, and their hindquarters facing away from the vertical rotation axis.

It is an object of the invention to provide at least an alternative solution according to which livestock animals can be accommodated in an efficient way in a livestock treatment carousel, while the livestock animals are stimulated in an animal-friendly way to enter and/or leave their stalls.

For that purpose the invention provides a livestock treatment carousel for facilitating the treatment of a plurality of livestock animals, said carousel comprising:
- a substantially horizontal platform being rotatable, relative to earth's surface, about a substantially vertical rotation axis, at least part of the platform forming a livestock receiving area which is ringshaped around said rotation axis, is rotatable together with the platform and is arranged for simultaneously receiving a plurality of livestock animals; and
- a fence structure rotatable together with the platform and defining at and above said ringshaped livestock receiving area a plurality of mutually adjacent stalls;
   wherein each respective stall:
   - is situated at and above a ringsegment of the ringshaped livestock receiving area,
   - is rotatable together with the platform,
   - is arranged for receiving a livestock animal,
   - has an inner stall end facing towards said rotation axis and an opposite outer stall end facing away from said rotation axis, wherein the outer stall end is arranged for letting the livestock animal enter and leave said respective stall via the outer stall end, and
   - is provided with a corresponding feed container, rotatable together with said respective stall, and arranged for feeding a livestock animal when the livestock animal is in a treatment position in which it is received in said respective stall with its head facing away from said rotation axis and its hindquarters facing towards said rotation axis;
   wherein each respective feed container is arranged in a moveable manner relative to its corresponding stall such that, during rotation of the platform, the position of the respective feed container relative to its corresponding stall interchangeably moves between:
   - a feeding position in which the respective feed container is at least partly situated at or near the outer stall end of its corresponding stall for said feeding the livestock animal in its treatment position, and
   - an unblocking position in which, relative to the feeding position, at least part of the respective feed container has moved away from its corresponding stall to one of the stalls that is adjacent to its corresponding stall for at least partly unblocking the way for the livestock animal for said entering and leaving said corresponding stall.

Thanks to the said moveability of the feed containers between their feeding positions and their unblocking positions, it is possible to actually benefit from the presence of the feed containers, thus providing a proven animal-friendly way of stimulating the livestock animals to enter and/or leave their stalls, while at the same time the carousel may be designed with a decreased width of the stalls, thus allowing more stalls to be present on the same surface area of the ringshaped receiving area. In addition, said moveability provides the advantage that in the feeding position the accommodation space for an animal in a stall is relatively restricted which promotes a proper treatment position of an animal in a stall in the sense that the animal's hindquarters are relatively close to the inner stall end and thus properly accessible for receiving treatment, while in the unblocking position the walking space in a stall is relatively large which facilitates manoeuvering of an animal when the animal walks on the platform.

Said moveability of each respective feed container relative to its corresponding stall may be realized by means of various movement mechanisms and/or drive mechanisms, such as by means of electric motor(s), hydraulics, pneumatics, etcetera.

It is remarked that none of the two documents EP1733615A1 and GB1201651A discussed above, discloses the feature of the present invention that at least part of a feed container moves away from its corresponding stall to one of the stalls that is adjacent to its corresponding stall for at least partly unblocking the way for the livestock animal for said entering and leaving said corresponding stall. Instead of temporarily moving (part of) a feed container to an adjacent stall, the gates in EP1733615A1 and GB1201651A are temporarily moving relative to the platform, whereby the shapes of the corresponding stalls are temporarily changing. The reason is, as already discussed above, that the stall shapes evidently are defined by the positions of the gates.

In a preferable embodiment said moveability of each respective feed container relative to its corresponding stall is realized such that the respective feed container, at one point in time during a single rotation cycle of the platform, moves from its feeding position into its unblocking position for letting a livestock animal enter said corresponding stall and, at another point in time during that same single rotation cycle of the platform, moves again from its feeding position into its unblocking position, but then for letting a livestock animal leave said corresponding stall.

In this preferable embodiment, not only at the entrance location but also at the exit location of the carousel effective use is made of temporarily moving (part of) a feed container to an adjacent stall. This means that at a certain point in time not just one stall is functioning as such an adjacent stall containing (part of) an extra feed container, but two different ones of the stalls may simultaneously function as such an adjacent stall. This allows for very space-efficient arrangements of the stalls on the platform, such as non-herringbone stall patterns in which the side-by-side boundaries of adjacent stalls in a view from above are extending fully in radial directions relative to the vertical rotation axis of the platform. It is remarked that none of the two documents EP1733615A1 and GB1201651A discussed above, discloses the additional features of such a preferable embodiment of the present invention and that, in relation therewith, these documents disclose less space-efficient herringbone patterns of the stalls.

In a preferable embodiment said stalls are defined by fences of the fence structure, wherein each fence is fixedly attached to the platform and extends substantially in vertical direction and substantially in radial direction relative to the vertical axis.

In this preferable embodiment, each fence is fixedly attached to the platform, i.e. not pivotable relative to the platform of the carousel. Note that the gates known from the two documents EP1733615A1 and GB1201651A discussed above are in fact pivotable relative to the platform of the carousel. The thus fixedly attached fences of such a preferable embodiment of the present invention provide a relatively simple structure of the carousel and a safe environment for operators and animals. A further advantage, resulting from the fixedly attached fences, is that the animals, while being stalled on the rotating platform, can not undesirably move the fences, e.g. to create more space in their stalls or e.g. in case of fear or panic of the animals.

In a preferable embodiment said moveability of each respective feed container relative to its corresponding stall is realized in that the carousel further comprises:
- suspension means by which each respective feed container is suspended relative to its corresponding stall in such manner that gravity exerts a resultant force on the respective feed container, which resultant force is pushing the respective feed container from its feeding position into its unblocking position, and
- a resistance mechanism which, in dependence of the rotation position of the platform, selectively:
- resists said resultant force for keeping the respective feed container in its feeding position, or
- at least partly does not resist said resultant force for allowing the respective feed container to move from its feeding position into its unblocking position.

The application of such suspension means and resistance mechanism provides a very simple way of realizing said moveability.

Preferably, said moveability of each respective feed container relative to its corresponding stall is realized in that the suspension means comprises for each respective feed container a corresponding inclined rotation axis having an inclined angle relative to the vertical direction for thus realizing said exertion by gravity of said resultant force.

The application of such an inclined rotation axis enhances the simplicity of realizing said moveability.

Preferably, the resistance mechanism comprises a guiding structure which is substantially fixedly arranged relative to earth's surface and which extends in circumferential direction of the carousel in such manner that it guides the feed containers to automatically interchange during rotation of the platform between their feeding positions and their unblocking positions.

The application of such a guiding structure further enhances the simplicity of realizing said moveability. The application of such a guiding structure is also very reliable and requires negligible maintenance.

In a preferable embodiment, the fence structure comprises livestock passageways for allowing a livestock animal to make a U-turn at the livestock receiving area in the sense that the livestock animal, while forwardly walking, subsequently enters one of the stalls via the corresponding outer stall end and bends via one or more of the livestock passageways and via one or more neighbouring ones of the stalls to end up in its treatment position in the last entered neighbouring stall.

This provides for an efficient, reliable and animal-friendly way for guiding the livestock animals into their treatment positions.

Further details, aspects and embodiments of the invention will be described, by way of example only, with reference to the schematic figures in the enclosed drawing.
Fig. 1 shows, in view from above, an example of an embodiment of a livestock treatment carousel according to the invention.
Fig. 2 shows, in view from above, part of the carousel of Fig. 1 in a first rotation position of the platform of the carousel, together with some cows.
Fig. 3 similarly shows the part of the carousel of Fig. 2 in a second, slightly further rotated, rotation position of the platform.
Fig. 4 similarly shows the part of the carousel of Fig. 3 in a third, still slightly further rotated, rotation position of the platform.
Fig. 5 shows, in view from above, examples of embodiments of a feed container, a suspension means and a resistance mechanism used in the shown carousel.
Fig. 6 shows an example of an embodiment of a stall used in the shown carousel, in a side view onto a vertical and radial cross-sectional plane of the shown carousel.

The figures show a livestock treatment carousel 1. In the shown example the carousel 1 is used for milking cows. However, the carousel 1 may also be used for various other treatments of various other livestock animals.

The carousel 1 comprises a horizontal platform 2 which is rotatable, relative to earth's surface, about a vertical rotation axis 3 indicated in Fig. 1. The rotation directions are indicated by arrows 15. The rotation directions may be clockwise, as shown, but may also be counterclockwise. In the shown example, the platform is a livestock receiving area 2 which is ringshaped around the rotation axis 3. The milking of the cows is performed from a space 14 which is enclosed by the ringshaped receiving area 2. In the example this enclosed space 14 is not part of the platform 2, so an operator or farmer in the space 14 will not rotate together with the platform. Note, that alternative embodiments of the invention are possible for which the enclosed space 14 is part of the rotatable platform, in which cases an operator or farmer in the space 14 will rotate together with the platform.

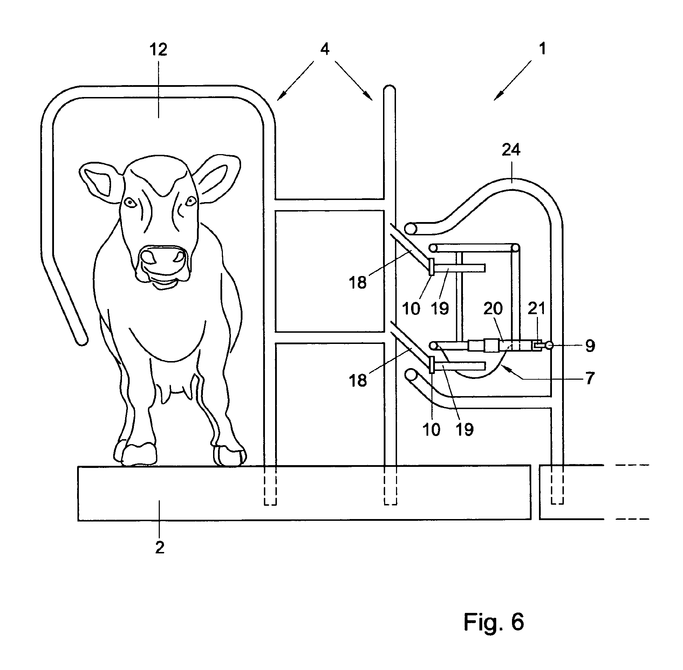

The carousel 1 further comprises a fence structure 4 rotatable together with the platform and defining at and above the ringshaped receiving area 2 a plurality of mutually adjacent stalls. In the example the fence structure comprises fences, see Figs. 1 and 6, each of which is fixedly attached to the platform 2 and extends substantially in vertical direction and in radial direction relative to the vertical axis 3. As an example, Fig. 1 shows that the carousel 1 has fourty such stalls, of which for simplicity only ten are indicated with reference numerals (Nos. I-X). Evidently, alternative embodiments are possible in which the carousel has a different number of stalls. Each respective stall is situated at and above a ringsegment of the ringshaped livestock receiving area 2, is rotatable together with the platform 2, is arranged for receiving a cow, has an inner stall end 5 facing towards said rotation axis 3 and an opposite outer stall end 6 facing away from said rotation axis 3. Via the outer stall end 6 a cow can enter and leave the concerned stall. Entering directions are indicated by arrows 16, while leaving directions are indicated by arrows 17.

Each respective stall is provided with a corresponding feed container 7. For simplicity these feed containers 7 are not shown in Fig. 1. Each feed container is rotatable together with its corresponding stall, and is arranged for feeding a cow when the cow is in its treatment position in which it is received in a stall with its head facing away from the rotation axis 3 and its hindquarters facing towards the rotation axis 3. For example, in Fig. 2 the cows B, C, D, W and X are in their treatment positions.

Each respective feed container 7 is arranged in a moveable manner relative to its corresponding stall such that, during rotation of the platform 2, the position of the respective feed container relative to its corresponding stall interchangeably moves between a feeding position in which the respective feed container 7 is at least partly situated at or near the outer stall end 6 of its corresponding stall for said feeding the cow in its treatment position, and an unblocking position in which, relative to the feeding position, at least part of the respective feed container 7 has moved away from its corresponding stall to one of the stalls that is adjacent to its corresponding stall for at least partly unblocking the way for the cow for entering and leaving the corresponding stall. For example, in Fig. 2 the feed containers 7 of stalls I, II, III, VIII, IX and X are in their feeding positions, while the feed containers 7 of stalls IV and VI are in their unblocking positions. In fact, in Fig. 2 the feed container 7 of stall IV has moved to adjacent stall V, so that stall V contains two feed containers simultaneously, i.e. the feed container 7 of stall IV as well as the feed container 7 of stall V itselves. Similarly, in Fig. 2 the feed container 7 of stall VI has moved to adjacent stall VII, so that stall VII contains two feed containers simultaneously, i.e. the feed container 7 of stall VI as well as the feed container 7 of stall VII itselves.

In the shown example, said moveability of each respective feed container 7 relative to its corresponding stall is realized in that the carousel 1 further comprises suspension means 8 by which each respective feed container is suspended relative to its corresponding stall in such manner that gravity exerts a resultant force on the respective feed container, which resultant force is pushing the respective feed container from its feeding position into its unblocking position, and a resistance mechanism 9 which, in dependence of the rotation position of the platform 2, selectively resists said resultant force for keeping the respective feed container 7 in its feeding position, or at least partly does not resist said resultant force for allowing the respective feed container 7 to move from its feeding position into its unblocking position.

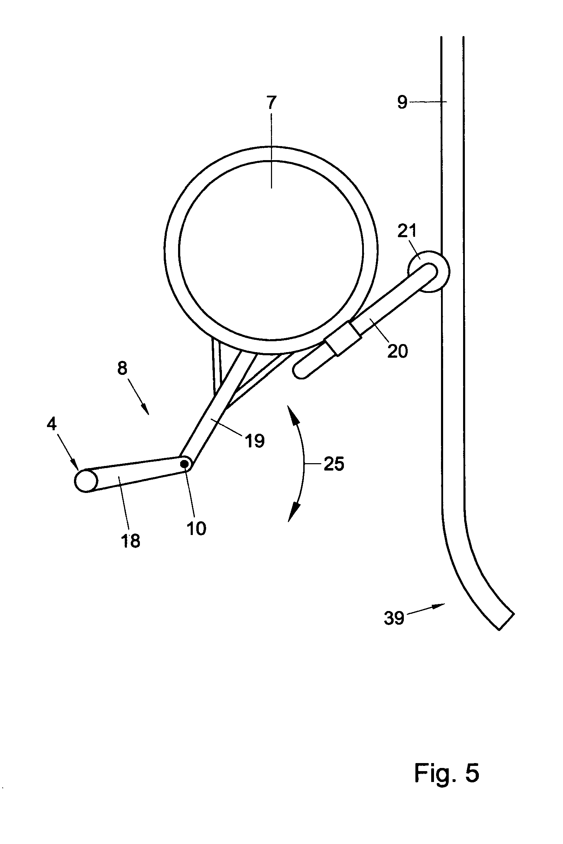

The suspension means 8 and the resistance mechanism 9 are best shown in Figs. 5 and 6. The suspension means 8 comprises a pair of struts 18 fixedly connected to a fence of the fence structure 4, as well as a pair of strut structures 19 fixedly connected to the feed container 7. The pair of strut structures 19 is pivotable relative to the pair of struts 18 about a rotation axis 10. The pivoting directions about this rotation axis 10 are indicated by double arrow 25 in Fig. 5. The rotation axis 10 has an inclined angle relative to the vertical direction for thus realizing said exertion by gravity of said resultant force. This inclined angle can be relatively small and, for reasons of simplicity, the inclined angle has not been shown in Fig. 6. The working principle behind the gravity controlled movement behaviour of the feed container 7 is similar to the working principle based upon which a door in a door frame having an imperfection in the directions of its vertical pivots tends to move in a particular pivot position.

In the shown example, the resistance mechanism comprises a guiding structure which is substantially fixedly arranged relative to earth's surface and which extends in circumferential direction of the carousel 1 in such manner that it guides the feed containers 7 to automatically interchange during rotation of the platform 2 between their feeding positions and their unblocking positions. In the example this guiding structure is formed by tubes 9 (shown in all figures) which are fixedly connected to a further fence structure 24 (see Fig. 6), which further fence structure 24 is fixedly attached relative to earth's surface and hence does not rotate together with the platform 2. As shown in Figs. 5 and 6, a bar 20 is fixedly connected to the feed container 7. The bar 20 holds a roller 21 on a free end of the bar 20. The bar 20 and the roller 21 are arranged such that the roller 21 may have rolling contact with the tubes 9. It is remarked that various other types of guiding structures are possible, such as guiding rails, or the like.

With particular reference to Figs. 2, 3 and 4 the operation of the shown carousel 1 is now explained as follows.

Fig. 2 shows the first rotation position of the platform 2 of the carousel 1. In this first rotation position the cows B, C, D, W and X are in their treatment positions in the stalls III, II, I, X, IX, respectively. At the shown moment cow A is leaving its stall IV via the outer stall end 6 of the stall IV. This is possible because the tube 9 is interrupted at the cow exit location of the carousel, while the feed container 7 of stall IV is in its unblocking position, it has moved to adjacent stall V. Furthermore, at the shown moment cow Y is entering the stall VI via the outer stall end 6 of the stall VI. This is possible because the tube 9 is also interrupted at the cow entrance location of the carousel, while the feed container 7 of stall VI is in its unblocking position, it has moved to adjacent stall VII.

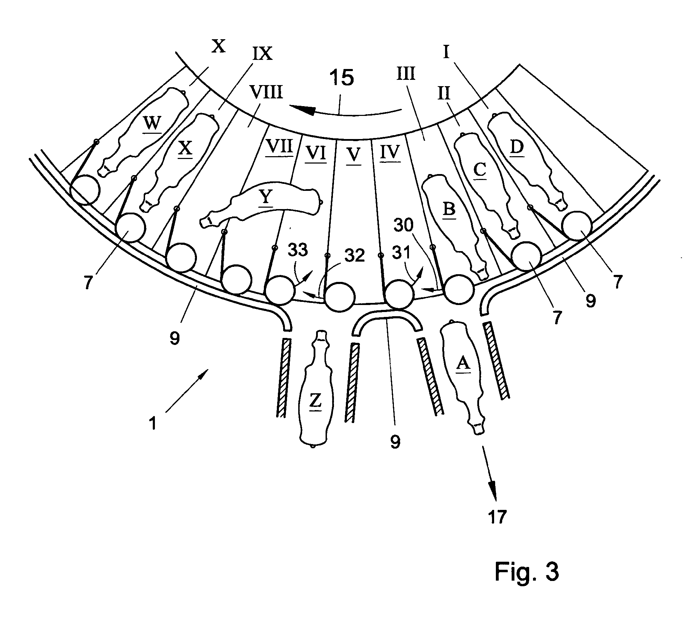

Fig. 3 shows the second rotation position of the platform 2 of the carousel 1. Relative to the first rotation position of Fig. 2, in the second rotation position of Fig. 3 the platform 2 has rotated in the direction of arrow 15 over an angular distance corresponding to half the width of a stall. At the shown moment cow A has fully left stall IV, while cow Y has fully entered stall VI and is performing a U-turn. That is, cow Y is bending via two livestock passageways 12 (see Fig. 6) and via the neighbouring stalls VI, VII and VIII with the purpose to end up in its treatment position in stall VIII. In the meantime cow Z has arrived at the entrance location of the carousel, while cow B will be able to leave stall III soon. At the shown moment the feed container of stall III is performing its pivoting movement from its own stall III towards adjacent stall IV (this movement is indicated by arrow 30 in Fig. 3), and the feed container of stall IV is performing its pivoting movement from its adjacent stall V towards its own stall IV (this movement is indicated by arrow 31 in Fig. 3). Furthermore, at the shown moment the feed container of stall V is performing its pivoting movement from its own stall V towards adjacent stall VI (this movement is indicated by arrow 32 in Fig. 3), and the feed container of stall VI is performing its pivoting movement from its adjacent stall VII towards its own stall VI (this movement is indicated by arrow 33 in Fig. 3).

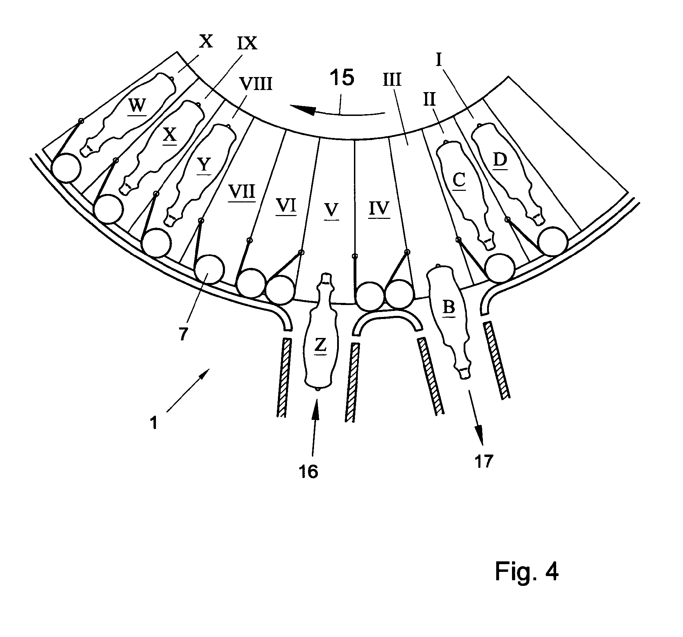

Fig. 4 shows the third rotation position of the platform 2 of the carousel 1. Relative to the second rotation position of Fig. 3, in the third rotation position of Fig. 4 the platform 2 has rotated in the direction of arrow 15 over an angular distance corresponding to half the width of a stall. At the shown moment cow Y has reached its treatment position in stall VIII. Note, that it is a further advantage of the invention that the feeding position of the feed container 7 in stall VIII prevents the cow Y, when it has arrived in stall VIII, to walk too far ahead in the direction of the outer stall end 6 of stall VIII. In fact, the feeding position of the feed container 7 thus serves to promote a proper treatment position of the cow in its stall so that the cow's hindquarters are close enough to the inner stall end 5. Thus the cow's udder will be in proper reach of the milker. Furthermore, at the shown moment, cow B is leaving its stall III via the outer stall end 6 of the stall III, and cow Z is entering the stall V via the outer stall end 6 of the stall V.

It is remarked that the guiding tubes 9, as seen in view from above, have local extra deflections near their ends at the entrance and exit locations of the carousel. This is for example shown at the locations indicated by reference numerals 39 in Figs. 1 and 5. Such local deflections serve to promote a smooth movement behaviour of the feed container when moving from the feeding position towards the unblocking position. Such local deflections furthermore serve to effectively pick-up a feed container in its unblocking position and to smoothly guide the picked-up feed container towards the feeding position.

In the foregoing specification, the invention has been described with reference to specific examples of embodiments of the invention. It will, however, be evident that various modifications and changes may be made therein without departing from the broader scope of the invention as set forth in the appended claims.

For example, in operation the platform 2 may rotate continuously. However, it is also possible that the platform may be stopped now and then during operation. Cows that have entered the carousel 1 may remain in the carousel for one rotation cycle. However, it is also possible that cows may (selectively) remain in the carousel for two or more rotation cycles. For that purpose, the carousel may optionally have additional means for controlling that at the entrance and/or exit locations of the carousel the feed containers are (selectively) prevented from moving from their feeding positions into their unblocking positions. Also, the carousel may comprise various means for filling the feed containers.

Furthermore it is possible to provide for means making the distance between a roller 21 (see Fig. 5) and its corresponding feed container 7 adjustable, for example by using a length adjustable bar 20. In that way the carousel is adaptable so as to better match, in the feeding positions of the feed containers, different (head-hindquarters) lengths of the animals. For example, if the carousel is to be used for animals, each having a relatively short length, each bar 20 of the carousel may then be easily increased in length, thus guaranteeing that the hindquarters of the animals are close to the inner stall ends 5 for facilitating the treatment of the animals. Conversely, if the carousel is to be used for animals, each having a relatively long length, each bar 20 of the carousel may then be easily decreased in length.

However, other modifications, variations and alternatives are also possible. The specifications and drawings are, accordingly, to be regarded in an illustrative rather than in a restrictive sense.

## Claims

1. A livestock treatment carousel for facilitating the treatment of a plurality of livestock animals, said carousel (1) comprising:
- a substantially horizontal platform (2) being rotatable, relative to earth's surface, about a substantially vertical rotation axis (3), at least part of the platform forming a livestock receiving area (2) which is ringshaped around said rotation axis, is rotatable together with the platform and is arranged for simultaneously receiving a plurality of livestock animals (A-Z); and
- a fence structure (4) rotatable together with the platform and defining at and above said ringshaped livestock receiving area a plurality of mutually adjacent stalls (I-X);
wherein each respective stall:
- is situated at and above a ringsegment of the ringshaped livestock receiving area (2),
- is rotatable together with the platform,
- is arranged for receiving a livestock animal,
- has an inner stall end (5) facing towards said rotation axis (3) and an opposite outer stall end (6) facing away from said rotation axis (3), wherein the outer stall end is arranged for letting the livestock animal enter and leave said respective stall via the outer stall end (6), and
- is provided with a corresponding feed container (7), rotatable together with said respective stall, and arranged for feeding a livestock animal when the livestock animal is in a treatment position in which it is received in said respective stall with its head facing away from said rotation axis (3) and its hindquarters facing towards said rotation axis (3);
**characterized in that** each respective feed container (7) is arranged in a moveable manner relative to its corresponding stall (I-X) such that, during rotation of the platform (2), the position of the respective feed container relative to its corresponding stall interchangeably moves between:
- a feeding position in which the respective feed container (7) is at least partly situated at or near the outer stall end (6) of its corresponding stall for said feeding the livestock animal in its treatment position, and
- an unblocking position in which, relative to the feeding position, at least part of the respective feed container (7) has moved away from its corresponding stall to one of the stalls that is adjacent to its corresponding stall for at least partly unblocking the way for the livestock animal for said entering and leaving said corresponding stall.

2. A livestock treatment carousel according to claim 1, wherein said moveability of each respective feed container (7) relative to its corresponding stall (I-X) is realized such that the respective feed container, at one point in time during a single rotation cycle of the platform (2), moves from its feeding position into its unblocking position for letting a livestock animal enter said corresponding stall and, at another point in time during that same single rotation cycle of the platform, moves again from its feeding position into its unblocking position, but then for letting a livestock animal leave said corresponding stall.

3. A livestock treatment carousel according to claim 1 or 2, wherein said stalls (I-X) are defined by fences (4) of the fence structure, wherein each fence (4) is fixedly attached to the platform (2) and extends substantially in vertical direction and substantially in radial direction relative to the vertical axis (3).

4. A livestock treatment carousel according to any of the preceding claims, wherein said moveability of each respective feed container (7) relative to its corresponding stall (I-X) is realized in that the carousel (1) further comprises:
- suspension means (8) by which each respective feed container is suspended relative to its corresponding stall in such manner that gravity exerts a resultant force on the respective feed container, which resultant force is pushing the respective feed container from its feeding position into its unblocking position, and
- a resistance mechanism (9) which, in dependence of the rotation position of the platform (2), selectively:
- resists said resultant force for keeping the respective feed container (7) in its feeding position, or
- at least partly does not resist said resultant force for allowing the respective feed container (7) to move from its feeding position into its unblocking position.

5. A livestock treatment carousel according to claim 4, wherein said moveability of each respective feed container (7) relative to its corresponding stall (I-X) is realized in that the suspension means (8) comprises for each respective feed container a corresponding inclined rotation axis (10) having an inclined angle relative to the vertical direction for thus realizing said exertion by gravity of said resultant force.

6. A livestock treatment carousel according to claim 4 or 5, wherein the resistance mechanism comprises a guiding structure (9) which is substantially fixedly arranged relative to earth's surface and which extends in circumferential direction of the carousel (1) in such manner that it guides the feed containers (7) to automatically interchange during rotation of the platform (2) between their feeding positions and their unblocking positions.

7. A livestock treatment carousel according to any of the preceding claims, wherein the fence structure (4) comprises livestock passageways (12) for allowing a livestock animal (A-Z) to make a U-turn at the livestock receiving area (2) in the sense that the livestock animal, while forwardly walking, subsequently enters one of the stalls (I-X) via the corresponding outer stall end (6) and bends via one or more of the livestock passageways (12) and via one or more neighbouring ones of the stalls (I-X) to end up in its treatment position in the last entered neighbouring stall.

## Patentansprüche

1. Viehbehandlungskarussell zur leichteren Behandlung mehrerer Tiere, wobei das Karussell (1) umfasst:
- eine im Wesentlichen horizontale Plattform, die in Bezug auf die Erdoberfläche drehbar ist um eine im Wesentlichen vertikale Drehachse (3), wobei mindestens ein Teil der Plattform einen Viehaufnahmebereich (2) bildet, der ringförmig um die Drehachse angeordnet ist, zusammen mit der Plattform drehbar ist und angeordnet ist, um gleichzeitig mehrere Tiere (A-Z) aufzunehmen; und
- eine Zaunstruktur (4), die zusammen mit der Plattform drehbar ist und an und über dem ringförmigen Viehaufnahmebereich mehrere aneinander grenzende Boxen (I-X) definiert;
wobei jede jeweilige Box:
- an und über einem Ringsegment des ringförmigen Viehaufnahmebereichs (2) angeordnet ist,
- zusammen mit der Plattform drehbar ist,
- für die Aufnahme eines Tieres angeordnet ist,
- ein zur Drehachse (3) gerichtetes inneres Boxende (5) und ein von der Drehachse (3) weg gerichtetes äußeres Boxende (6) aufweist, wobei das äußere Boxende angeordnet ist, damit das Tier die entsprechende Box über das äußere Boxende (6) betreten und verlassen kann, und
- mit einem entsprechenden Futterbehälter (7) versehen ist, der drehbar mit der entsprechenden Box ist und angeordnet ist, um ein Tier zu füttern, wenn das Tier in einer Behandlungsposition ist, in der es so in die entsprechende Box aufgenommen ist, dass sein Kopf von der Drehachse (3) weg gerichtet ist und sein Gesäß zur Drehachse (3) hin gerichtet ist;
**dadurch gekennzeichnet, dass** jeder jeweilige Futterbehälter (7) beweglich auf seine entsprechende Box (I-X) angeordnet ist, sodass beim Drehen der Plattform (2) die Position des jeweiligen Futterbehälters in Bezug auf seine entsprechende Box sich abwechselnd bewegt zwischen:
- einer Fütterungsposition, in welcher der jeweilige Futterbehälter (7) mindestens teilweise an oder nahe dem äußeren Boxende (6) seiner entsprechenden Box angeordnet ist, um das Tier in seiner Behandlungsposition zu füttern, und
- einer nicht blockierten Position, in welcher mindestens ein Teil des entsprechenden Futterbehälters (7) in Bezug auf die Fütterungsposition sich von seiner entsprechenden Box weg zu einer der Boxen bewegt hat, die an seine entsprechende Box angrenzt, um mindestens teilweise den Weg freizugeben, damit das Tier in die entsprechende Box hineingehen und sie verlassen kann.

2. Viehbehandlungskarussell nach Anspruch 1, wobei die Bewegbarkeit jedes jeweiligen Futterbehälters (7) in Bezug auf seine entsprechende Box (I-X) so ausgeführt ist, dass der jeweilige Futterbehälter an einem Zeitpunkt während eines einzelnen Drehzyklus der Plattform (2) sich von seiner Fütterungsposition in seine nicht blockierende Position bewegt, damit ein Tier in die entsprechende Box hineingehen kann, und an einem anderen Zeitpunkt während desselben Drehzyklus der Plattform sich erneut von seiner Fütterungsposition in seine nicht blockierende Position bewegt, damit dann aber ein Tier die entsprechende Box verlassen kann.

3. Viehbehandlungskarussell nach Anspruch 1 oder 2, wobei die Boxen (I-X) durch Zäune (4) der Zaunstruktur definiert sind, wobei jeder Zaun (4) fest an der Plattform (2) befestigt ist und im Wesentlichen in vertikaler Richtung und im Wesentlichen in radialer Richtung in Bezug auf die vertikale Achse (3) verläuft.

4. Viehbehandlungskarussell nach einem der vorhergehenden Ansprüche, wobei die Bewegbarkeit jedes jeweiligen Futterbehälters (7) in Bezug auf seine entsprechende Box (I-X) dadurch realisiert wird, dass das Karussell (1) ferner umfasst:
- Aufhängmittel (8), mit denen jeder jeweilige Futterbehälter in Bezug auf seine entsprechende Box so aufgehängt wird, dass die Schwerkraft eine resultierende Kraft auf den jeweiligen Futterbehälter ausübt, die den jeweiligen Futterbehälter aus seiner Fütterungsposition in seine nicht blockierende Position drückt, und
- einen Widerstandsmechanismus (9), der in Abhängigkeit von der Drehposition der Plattform (2) selektiv:
- der resultierenden Kraft widersteht, um den jeweiligen Futterbehälter (7) in seiner Fütterungsposition zu halten, oder
- mindestens teilweise der resultierenden Kraft nicht widersteht, um es zu ermöglichen, dass sich der jeweilige Futterbehälter (7) aus seiner Fütterungsposition in seine nicht blockierende Position bewegt.

5. Viehbehandlungskarussell nach Anspruch 4, wobei die Bewegbarkeit jedes jeweiligen Futterbehälters (7) in Bezug auf seine entsprechende Box (I-X) dadurch realisiert wird, dass das Aufhängmittel (8) für jeden jeweiligen Futterbehälter eine entsprechende geneigte Drehachse (10) mit einem Neigungswinkel zur vertikalen Richtung umfasst, um so das Ausüben der resultierenden Kraft durch Schwerkraft zu realisieren.

6. Viehbehandlungskarussell nach Anspruch 4 oder 5, wobei der Widerstandsmechanismus eine Führungsstruktur (9) umfasst, der im Wesentlichen fest in Bezug auf die Erdoberfläche angeordnet ist und der in Umfangrichtung des Karussells (1) so verläuft, dass er die Futterbehälter (7) leitet, dass sie beim Drehen der Plattform automatisch zwischen ihren Fütterungspositionen und ihren nicht blockierenden Positionen wechseln.

7. Viehbehandlungskarussell nach einem der vorhergehenden Ansprüche, wobei die Zaunstruktur (4) Viehdurchgangswege (12) umfasst, damit ein Tier (A-Z) am Viehbehandlungsbereich (2) eine Kehrtwende in die Richtung machen kann, dass das Tier, während es vorwärts geht, im Wesentlichen eine der Boxen (I-X) über das entsprechende äußere Boxende (6) betritt und sich über eine oder mehrere der Viehdurchgangswege (12) und über eine oder mehrere der benachbarten der Boxen (I-X) biegt, um in seiner Behandlungsposition in der zuletzt betretenen benachbarten Box zu enden.

## Revendications

1. Carrousel de traitement de bétail pour faciliter le traitement d'une pluralité d'animaux de cheptel, ledit carrousel (1) comprenant :
une plateforme sensiblement horizontale (2) qui peut tourner, par rapport à la surface de la terre, autour d'un axe de rotation (3) sensiblement vertical, au moins une partie de la plateforme formant une zone de réception de bétail (2) qui est de forme annulaire autour dudit axe de rotation, peut tourner conjointement avec la plateforme et est agencée pour recevoir simultanément une pluralité d'animaux de cheptel (A-Z) ; et
une structure de barrière (4) pouvant tourner conjointement avec la plateforme et définissant au niveau de et au-dessus de ladite zone de réception de bétail de forme annulaire, une pluralité de stalles (I-X) mutuellement adjacentes ;
dans lequel chaque stalle respective :
est située au niveau de et au-dessus d'un segment annulaire de la zone de réception du bétail de forme annulaire (2),
peut tourner conjointement avec la plateforme,
est agencée pour recevoir un animal de cheptel,
a une extrémité de stalle interne (5) orientée vers ledit axe de rotation (3) et une extrémité de stalle externe (6) opposée, orientée à distance dudit axe de rotation (3),
dans lequel l'extrémité de stalle externe est agencée pour laisser le bétail entrer et sortir de ladite stalle respective via l'extrémité de stalle externe (6), et
est prévue avec un récipient d'alimentation (7) correspondant, pouvant tourner conjointement avec ladite stalle respective, et agencé pour alimenter un animal de cheptel lorsque l'animal de cheptel est dans une position de traitement dans laquelle il est reçu dans ladite stalle respective avec sa tête orientée à distance dudit axe de rotation (3) et son arrière-train orienté vers ledit axe de rotation (3) ;
**caractérisé en ce que** chaque récipient d'alimentation (7) respectif est agencé d'une manière mobile par rapport à sa stalle (I-X) correspondante de sorte que, pendant la rotation de la plateforme (2), la position du récipient d'alimentation respectif par rapport à sa stalle correspondante se déplace de manière interchangeable entre :
une position d'alimentation dans laquelle le récipient d'alimentation (7) respectif est au moins partiellement situé au niveau de ou à proximité de l'extrémité de stalle externe (6) de sa stalle correspondante pour alimenter ledit animal de cheptel dans sa position de traitement, et
une position de déblocage dans laquelle, par rapport à la position d'alimentation, au moins une partie du récipient d'alimentation (7) respectif est déplacé de sa stalle correspondante vers l'une des stalles qui est adjacente à sa stalle correspondante pour débloquer au moins partiellement la voie pour que ledit animal de cheptel entre et sorte de ladite stalle correspondante.

2. Carrousel de traitement de bétail selon la revendication 1, dans lequel ladite mobilité de chaque récipient d'alimentation (7) respectif par rapport à sa stalle correspondante (I-X) est réalisée de sorte que le récipient d'alimentation respectif, à un moment pendant un cycle de rotation unique de la plateforme (2), passe de sa position d'alimentation à sa position de déblocage pour laisser un animal de cheptel entrer dans ladite stalle correspondante, et à un autre moment pendant ce même cycle de rotation unique de la plateforme, passe à nouveau de sa position d'alimentation à sa position de déblocage, mais ensuite laisse sortir un animal de cheptel de ladite stalle correspondante.

3. Carrousel de traitement de bétail selon la revendication 1 ou 2, dans lequel lesdites stalles (I-X) sont définies par des barrières (4) de la structure de barrière, dans lequel chaque barrière (4) est fixée de manière fixe sur la plateforme (2) et s'étend sensiblement dans la direction verticale et sensiblement dans la direction radiale par rapport à l'axe vertical (3).

4. Carrousel de traitement de bétail selon l'une quelconque des revendications précédentes, dans lequel ladite mobilité de chaque récipient d'alimentation (7) respectif par rapport à sa stalle (I-X) correspondante est réalisée de sorte que le carrousel (1) comprend en outre :
des moyens de suspension (8) grâce auxquels chaque récipients d'alimentation respectif est suspendu par rapport à sa stalle correspondante de sorte que la gravité exerce une force résultante sur le récipient d'alimentation respectif, laquelle force résultante pousse le récipient d'alimentation respectif de sa position d'alimentation à sa position de déblocage, et
un mécanisme de résistance (9) qui, en fonction de la position de rotation de plateforme (2) :
résiste sélectivement à ladite force résultante pour maintenir le récipient d'alimentation (7) respectif dans sa position d'alimentation, ou bien
ne résiste pas, au moins partiellement à ladite force résultante, pour permettre au récipient d'alimentation (7) respectif de passer de sa position d'alimentation à sa position de déblocage.

5. Carrousel de traitement de bétail selon la revendication 4, dans lequel ladite mobilité de chaque récipient d'alimentation (7) respectif par rapport à sa stalle (I-X) correspondante est réalisée de sorte que les moyens de suspension (8) comprennent, pour chaque récipient d'alimentation respectif, un axe de rotation (10) incliné correspondant ayant un angle incliné par rapport à la direction verticale pour que la gravité exerce ainsi ladite force résultante.

6. Carrousel de traitement de bétail selon la revendication 4 ou 5, dans lequel le mécanisme de résistance comprend une structure de guidage (9) qui est agencée de manière sensiblement fixe par rapport à la surface de la terre, et qui s'étend dans la direction circonférentielle du carrousel (1) de sorte qu'elle guide les récipients d'alimentation (7) pour interchanger automatiquement, pendant la rotation de la plateforme (2), leur position d'alimentation et leur position de déblocage.

7. Carrousel de traitement de bétail selon l'une quelconque des revendications précédentes, dans lequel la structure de barrière (4) comprend des voies de passage de bétail (12) pour permettre à un animal de cheptel (A-Z) de faire un demi-tour au niveau de la zone de réception de bétail (2) dans le sens dans lequel l'animal de cheptel, alors qu'il avance, pénètre ensuite dans l'une des stalles (I-X) via l'extrémité de stalle externe (6) correspondante et fait demi-tour via une ou plusieurs voies de passage de bétail (12) et via une ou plusieurs stalles voisines des stalles (I-X) pour arriver dans sa position de traitement dans la dernière stalle voisine dans laquelle il est entré.
